# EUROPÄISCHE PATENTSCHRIFT

(11) **EP 2 352 004 B1**
(45) Veröffentlichungstag und Bekanntmachung des Hinweises auf die Patenterteilung: **26.07.2017**
(21) Anmeldenummer: 11151197.8
(22) Anmeldetag: 18.01.2011
(51) Int. Cl.: H01R 13/405, G01M 3/32

(54) **Überwachungssystem für eine Brennstoffspeicheranlage**
Monitoring system for a fuel storage facility
Système de surveillance pour une installation de stockage de carburant

(30) Priorität: 29.01.2010 IT BZ20100004
(43) Veröffentlichungstag der Anmeldung: 03.08.2011
(73) Patentinhaber: Wolftank Systems AG, 39100 Bozen (IT)
(72) Erfinder: Majohr, Martin, 39100, Bolzano (IT); Werth, Peter, 39100, Bolzano (IT); Thurner, Florian, 39100, Bolzano (IT)
(74) Vertreter: Weiser, Andreas

(56) Entgegenhaltungen:
- EP-A2- 0 875 746
- GB-A- 2 418 952
- US-A- 5 052 217
- US-A- 5 631 445
- US-A1- 2004 234 338
- US-A1- 2004 261 503

## Beschreibung

Die Erfindung bezieht sich auf ein Überwachungssystem für eine Brennstoffspeicheranlage gemäß dem Oberbegriff des Anspruchs 1.

Aus der US 2004 261503 A1 ist eine Leckwarnanlage für die Lagerung von explosions-und gesundheitsgefährdende Brennstoffe in Brennstoffspeicheranlagen bekannt. Dabei werden die Sensoren und das Vakuumpumpensystem zur Überwachung des Zwischenraums im Kontrollschacht (im explosionsgefährdeten Bereich ATEX - atmospheres et explosibles - Zone 1) eines erdvergrabenen Tanks platziert. Die Wartung und der Austausch dieser Lecküberwachungsanlage ist demnach besonders zeitaufwendig, kostenintensiv und birgt zudem ein gewisses Sicherheitsrisiko durch das Arbeiten im explosionsgefährdeten Bereich für das Wartungspersonal. Das Wartungspersonal muss für diese Gefahrenzone speziell ausgebildet sein sowie die Sicherheitsvorschriften genau befolgen, was zusätzlichen Kontroll- und Schulungsaufwand beinhaltet. Außerdem müssen alle Wartungs- und Servicearbeiten in dieser Zone immer von mindestens zwei qualifizierten Arbeitern durchgeführt werden, damit der zweite bei Gasaustritt den ersten Arbeiter aus der Gefahrenzone heraus bringen kann, wenn dieser nicht bewegungsfähig bzw. ohnmächtig wird. Ein zweiter Nachteil ergibt sich aus den hohen Materialkosten, da alle verbauten Elemente für die entsprechende explosionsgefährliche Zone gebaut und geprüft sein müssen, was diese sehr teuer macht.

Aus dem Patent US 5,052,217 ist eine weitere Überwachungseinheit einer Brennstoffspeicheranlage bekannt. Diese umfasst gleichfalls einen Leckmelder (mit der Nummer 74 im Text angegeben), der ebenso in der Gefahrenzone im Kontrollschacht angebracht ist und deshalb die selben Nachteile in Bezug auf Wartung aufweist, wie bereits bei US 2004 261503 beschrieben.

Im Patent US 2004 4 234338 A1 wird eine Leckwarnanlage für Brennstoffspeicheranlagen erläutert, in der die elektrischen Leitungen aus der Gefahrenzone herausgeführt werden. Die zur Überwachung eingesetzten Sensoren bleiben allerdings, wie in den beiden vorherigen Veröffentlichungen beschrieben, in der Gefahrenzone der Tanköffnung.

Aus der Veröffentlichung WO 2009 13 2365 ist eine Leckwarnanlage für doppelwandige Fluidleitungen, insbesondere für Tankstellen bekannt, bestehend aus:
- einer statischen Druck- /Unterdrucküberwachungsleitung,
- einer Leitung und
- einem Verbindungssystem der Leitungen mit dem Zwischenraum des Speichers
Es ist überdies ein Regulierungssystem des statischen Druck-/Unterdrucks im Zwischenraum eines jeden Speichers erklärt, der folgende Elemente umfasst:
- ein Ventil und
- eine Regelvorrichtung.

Ferner ist aus der Schrift GB 2 418 952 A bekannt, Sensoren und Vakuumpumpe im Kontrollschacht eines Doppelwandtanks und einen Leckmelder außerhalb des Kontrollschachts anzuordnen und mit einer Leitung zu verbinden. Die für die Verbindungsleitung vorgesehene Durchtrittsöffnung in der Wand des Kontrollschachtes soll dabei abgedichtet sein.

### Kritik an den oben angegebenen Veröffentlichungen:

Die obigen Systeme, auch wenn fortgeschritten und ausgereift, beschreiben keinerlei Sicherheitseinrichtungen bei der Entwicklung der Systeme oder den Verbindungsleitungen zwischen dem explosionsgefährlichen und dem nicht-explosionsgefährlichen Bereich, denn auch wenn die Sicherheitseinrichtung im Kontrollschacht, also im explosionsgefährlichen Bereich untergebracht ist, erfolgt die Überwachung, Steuerung und Stromversorgung der Einrichtungen in der Regel von außen. Die dafür benötigten Anschlüsse bedürfen in der Regel Rohrleitungen, durch die giftige und explosive Dämpfe der gelagerten, explosions- und gesundheitsgefährlichen Medien oder ausgetretenen Medienreste außerhalb des Kontrollschachtes gelangen können und woanders wiederum eine explosions- oder gesundheitsgefährliche Umgebung erzeugen können. Dies bildet wiederum eine Gefahrenquelle für das Wartungs- und Servicepersonal. Die Aufgaben der vorliegenden Erfindung liegen darin, eine solche Sicherheitseinrichtung zu beschreiben.

Weiterführend verursachen die obigen Systeme aufgrund des explosionsgefährdeten Bereichs ATEX Zone 1, wie bereits eingangs erläutert, große Kosten für die Herstellung der zu verwendenden Materialien mit den notwendigen Eigenschaften (Explosionssicherheit, die speziell zertifiziert werden muss) und setzen dazu das Wartungs- oder Servicepersonal aufgrund des Arbeitens in der explosionsgefährdeten Umgebung einer prinzipiellen Arbeitsgefahr aus, der nur mit aufwändigen Vorgangs- und Arbeitssicherheitsanweisen, teuren Schulungen und speziellen Arbeitsutensilien begegnet werden kann. Eine regelmäßige Wartung der Sicherheitseinrichtungen im Gefahrenbereich (hier des Kontrollschachtes einer Brennstoffspeicheranlage) ist gesetzliche Pflicht.

Um diese Kosten generell zu verringern wird zudem in der vorliegenden Erfindung als fortführende Stufe aufgezeigt, dass durch die Auslagerung der Überwachungseinheit aus dem Kontrollschacht die Wartung und Säuberung von Kontrollschächten bekannter Brennstoffspeicheranlagen noch gefahrenreduzierter und ökonomisch noch effizienter gestaltet werden können, indem die Arbeiten nun außerhalb des explosionsgefährdeten Bereiches erfolgen können.

Die Anordnungen der vorliegenden Erfindung werden gemäß dem kennzeichnenden Teil des Anspruchs 1 gelöst.

Die vorliegende Erfindung sieht daher vor, ein Überwachungssystem auszuführen, das im Kontrollschacht des Speichers und daher im Bereich ATEX Zone 1 positioniert ist, wobei verhindert wird, dass Dämpfe aus dem Schacht über die Verbindungsrohrleitungen der Anschlüsse der Überwachungseinheit nach außen gelangen.

Der Vorteil besteht in der allgemein höheren Sicherheit des Tankstellen- und Wartungspersonals sowie im Herabsetzen der Materialkosten des äußeren Leckmelders oder des diesen Leckmelder enthaltenden Schrankes, bei dem nun keinerlei Einrichtungen zum Schutz vor explosiven oder giftigen Dämpfen mehr vorzusehen sind. Beispielsweise können die Überwachungssysteme mindestens zweier Speicher derart ausgeführt werden, dass die einzelnen Überwachungssysteme außerhalb der Kontrollschächte zentral in einem Überwachungsschrank zusammengeführt werden, was zudem noch eine einfachere und raschere Wartung der Überwachungssysteme erlaubt.

Zusammengefasst besteht der Vorteil dieses beispielhaften Überwachungssystems in der Zusammenführung der Überwachungseinheiten der einzelnen Speicher innerhalb eines Schrankes außerhalb der Kontrollschächte, was den Zugang zu den verschiedenen Schächten, und damit zu dem Gefahrenbereich der verschiedenen Speicher überflüssig macht. Denn wird eine Wartung- oder Servicearbeit ausgeführt, müssen im Vorhinein umfangreiche Reinigungsarbeiten zur Entfernung der giftigen und explosiven Dämpfe der gelagerten Medien oder ausgetretenen Medienresten selbst (z. B. durch den unsachgemäßen Umgang bei der Befüllung oder Füllstandsmessung mit Peilstäben des Schachtes) abgewickelt werden. Diese außerordentliche Reinigung kostet zusätzlich Zeit und Geld. Vorteilhaft ist nun, dass die Wartung ohne Zugang zum Kontrollschacht ausgeführt werden kann und dass dies ein erhebliches Ersparnis beim mühsamen Sicherheitsvorgehen für die Säuberung und Lüftung des Mannloches bedeutet, die vor dem Zugang der Bedienungsperson zu diesem Bereich notwendig sind. Zudem bestehen nun wesentlich weniger Gefahrenpotenziale und damit auch geringere Sicherheitsanforderungen. Die Wartung wird zudem in einer ergonomisch günstigen Position ausgeführt, was zudem die Verletzungsgefahr reduziert.

Überdies ist nicht mehr die Anwesenheit einer zweiten Bedienungsperson für die Sicherheitsmaßnahmen notwendig, die im Notfall überwacht und eingreift, um den Austritt der ersten Bedienungsperson aus dem Schacht oder dem Mannloch zu begleiten.

Als Endbetrachtung ist hinzuzufügen, dass neben den beschriebenen Vorteilen zudem eine erhebliche Zeitersparnis bei den Überwachungs-und Wartungsarbeiten erzielt wird. Verbunden ist diese mit einer Herabsetzung der Materialkosten der verschiedenen Bestandteile des äußeren Kontrollschrankes, denn die Bestandteile der Sicherheitseinrichtungen befinden sich nicht mehr in der ATEX Gefahrenzone 1, also im Kontrollschacht, sondern in der ATEX Gefahrenzone 2, bei der wesentlich geringe Schutzauflagen eingehalten werden müssen.

Die Sicherheitseinrichtungen eines Überwachungssystems für eine Brennstoffspeicheranlage sehen gemäß der Erfindung vor:
- einen doppelwandigen Speicher, der einen Kontrollschacht besitzt,
- eine Kontroll- und Überwachungseinheit für den Speicher, die im Kontrollschacht angeordnet und mit dem Zwischenraum der Doppelwand des Speichers mittels einer Rohrleitung verbunden ist - aus Kupfer, Stahl oder leitfähigem PVC oder einem anderen Material, das den Dämpfen des gelagerten Mediums widersteht - zur Messung des Druckes und eine Rohrleitung zur Absaugung - aus Kupfer Stahl oder leitfähigem PVC oder einem anderen Material, das den Dämpfen des gelagerten Mediums widersteht und leitfähig ist -,
- die Kontrolleinheit umfasst eine Fluidsammelleitung als Ansaugrohrleitung und eine Messleitung mit einem Druckmesssensor für den Zwischenraum der Doppelwand in einer bevorzugten Version auch mit einem Manometer,
- der Druckmesssensor ist mit dem äußeren Leckmelder verbunden,
- die Verbindung wischen der Kontrolleinheit und dem Leckmelder erfolgt mittels Leitungen, die in Rohrleitungen aus beliebigen Materialien verlaufen. Diese müssen versiegelt werden, um das Austreten der Dämpfe im Kontrollschacht über die Anschlussrohrleitung zu vermeiden und eine größere Gesamtsicherheit zu gewährleisten.

Merkmale und Einzelheiten gehen aus den Ansprüchen und aus der folgenden Beschreibung eines bevorzugten Beispiels hervor. In der Zeichnung zeigen:

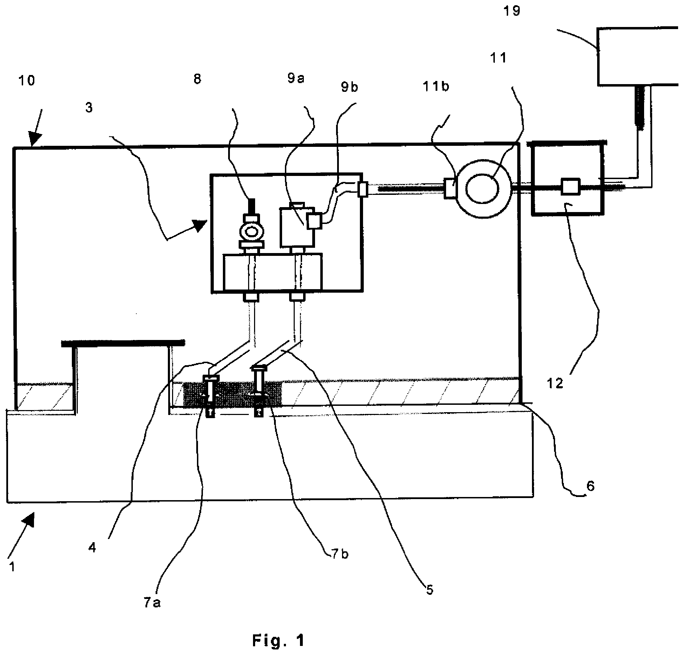

Figur 1 eine schematische Ansicht eines Überwachungssystems für einen Speicher mit der Sicherheitsverbindung, die das Aufsteigen der Dämpfe zu Leckmelder 19 vermeidet. Das System umfasst gemäß der Erfindung einen doppelwandigen Speicher 1 und seinen Kontrollschacht 10. Die Kontrolleinheit 3 ist mit der Doppelwand 6 über zwei Rohrleitungen (der Mess- und der Saugleitung) aus Kupfer, Stahl, leitfähigem PVC oder einem anderen Material, das dem gelagerten und leitfähigen Produkt 4, 5 widersteht, verbunden. Um eine sichere und einfache Verbindung zwischen den Rohrleitungen 4, 5 und dem Zwischenraum des Speichers 6 sicherzustellen, ist eine Verbindungsbolzen 7a, 7b zwischengeschaltet. Die Kontrolleinheit umfasst ein statisches Druck-/Unterdruck-Reguliersystem 8 (Saugleitung), einen statischen Druck-/Unterdruck-Messsensor 9a (Messleitung) und optional ein Manometer. Die Kontrolleinheit 3 ist mittels eines abgeschirmten Stromkabels mit innerer Sicherheit 9b mit einem Klemmkörper 11 verbunden. Die Durchführung erfolgt innerhalb eines Schutzschlauchs um eine Beschädigung des abgeschirmten Stromkabels durch Wartungs- und Reinigungsarbeiten im Kontrollschacht zu verhindern. Das Klemmgehäuse wird mit einem geeigneten Harz gefüllt, das dem im Speicher gelagerten Produkt widersteht. Das mit Harz gefüllte Klemmgehäuse verhindert den Übertritt von Dämpfen in die Anschlussrohrleitung. Der Austritt des geschirmten Stromkabels aus dem Klemmgehäuse erfolgt über eine Kabelklemme ATEX 11b, um auch dadurch den Dampfdurchtritt in das Rohr zu vermeiden.

Das abgeschirmte Kabel durchläuft in der Regel einen Zwischenschacht 12, um dann den Leckmelder oder den den Leckmelder enthaltenden Schrank 19 zu erreichen.

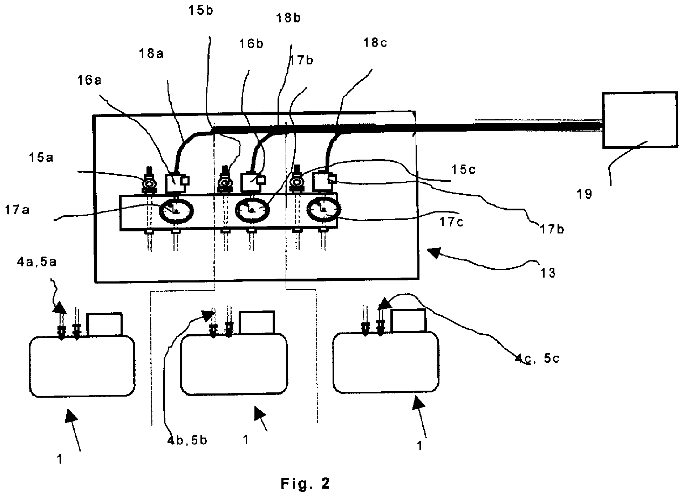

Die zentrale Zusammenführung der Überwachungseinheiten außerhalb des Kontrollschachts wird in Figur 2 gezeigt. Ein bevorzugtes Schema des Systems ist mit zentralem Kontroll- und Überwachungsschrank für mehrere Speicher vorgesehen.

Die Verbindung des Zwischenraums des Speichers mit der zentralisierten Überwachungsschrankeinheit 13 erfolgt über die
Saug- und Messleitung aus Kupfer, Stahl, leitfähigem PVC oder einem anderen Material, das dem gelagerten und leitfähigen Produkt 4 (4a, 4b, 4c) und 5 (5a, 5b, 5c) widersteht. Die Ausgangsstellen aus dem Kontrollschacht sollten versiegelt werden, um das Aussteigen von Dämpfen zu vermeiden.

Mit der zentralisierten Überwachungsschrankeinheit 13 ist mindestens ein zweiter Speicher verbunden. Die zentralisierte Überwachungsschrankeinheit weist für jeden Speicher einen getrennten Sektor auf. In einer bevorzugten Ausführungsform ist eineinziger Kollektor vorgesehen, der ein statisches Druck-/Unterdruck-Regelsystem(Saugleitung) 15a, 15b, 15c eines statischen Druck-/Unterdruck-Messsensors 16a, 16b, 16c und in einer bevorzugten Version ein dort angebrachtes Manometer (17a, 17b, 17c jeweils für jeden Speicher umfasst. Die abgeschirmten Stromkabel 18a, 18b, 18c der Druck-/ Unterdruck-Messsensoren 16a, 16b, 16c führen bis zur Leckmelder.

### Aufstellung der Bezugsziffern

- 1: doppelwandiger Speicher
- 3: Kontrolleinheit
- 4, 5: Saug- und Messleitungen
- 6: Doppelwand
- 7a, 7b: Verbindungsbolzen
- 8: Regelsystem
- 9a: statischer Druck/Unterdruck-Messsensor
- 9b: abgeschirmtes Kabel mit innerer Sicherheit
- 10: Mannloch
- 11: Klemmgehäuse
- 11b: Kabelklemme ATEX
- 12: Zwischenschacht
- 13: Kontrollschrank
- 4 (4a, 4b, 4c), 5 (5a, 5b, 5c): Leitungen
- 15a, 15b, 15c: Regelsysteme
- 16a, 16b, 16c: statischer Druck/Unterdruck-Messsensor
- 17a, 17b, 17c: Manometer
- 18a, 18b, 18c: abgeschirmte Kabel
- 19: Leckmelder

## Patentansprüche

1. Überwachungssystem für eine Brennstoffspeicheranlage, umfassend:
- einen doppelwandigen Speicher (1) , der einen Kontrollschacht (10) besitzt,
- eine Kontroll- und Überwachungseinheit (3) für den Speicher (1), die im Kontrollschacht (10) angeordnet ist und deren Verbindung mit dem Zwischenraum der Doppelwand (6) des Speichers (1) mittels einer Fluidsammelleitung (4) als Ansaugleitung - aus Kupfer, Stahl oder leitfähigem PVC oder einem anderen Material, das den Dämpfen des gelagerten Mediums widersteht und leitfähig ist - und mittels einer Messleitung (5) - aus Kupfer, Stahl oder leitfähigem PVC oder einem anderen Material, das den Dämpfen des gelagerten Mediums widersteht und leitfähig ist - erfolgt, wobei die Messleitung (5) mit einem Druckmesssensor (9a) zur Messung des Druckes in der Doppelwand (6) ausgestattet ist,
**dadurch gekennzeichnet, dass** der Druckmesssensor (9a) der Kontroll- und Überwachungseinheit (3) über ein geschirmtes Stromkabel (9b), einen im Inneren des Kontrollschachts (10) angeordneten Klemmkörper (11), der ein Gehäuse aufweist, und eine Anschlussrohrleitung mit einem außerhalb des Kontrollschachts (10) angeordneten Leckmelder (19) verbunden ist, wobei das Gehäuse des Klemmkörpers (11) mit einem geeigneten, dem im Speicher (1) gelagerten Produkt widerstehenden Harz gefüllt ist, das dazu ausgebildet ist, den Übertritt von Dämpfen in die Anschlussrohrleitung zum Leckmelder (19) zu verhindern um das Aufsteigen der Dämpfe in die Anschlussrohrleitung bis zum Leckmelder (19) zu vermeiden und somit eine größere Sicherheit zu gewährleisten.

2. Überwachungssystem gemäß Anspruch 1, **dadurch gekennzeichnet, dass** die Kontrolleinheit (3) mit einem Manometer ausgestattet ist.

3. Überwachungssystem gemäß Anspruch 1, **dadurch gekennzeichnet, dass** es im Kontrollschacht (10) des Speichers und daher im Bereich ATEX 1 (ATmospheres Explosibles) angeordnet ist, wobei der Austritt des geschirmten Stromkabels (9b) aus dem Gehäuse des Klemmkörpers (11) über eine ATEX-Kabelklemme (11b) erfolgt.

4. Überwachungssystem nach einem der vorstehenden Ansprüche, **dadurch gekennzeichnet, dass** der Leckmelder (19) dazu ausgebildet ist, die Daten über Internet, drahtlose Verbindung oder Telefon einem Kontrollzentrum zu übermitteln.

## Claims

1. Surveillance system for a fuel storage facility, comprising:
- a double-walled storage (1) having an inspection chamber (10),
- an inspection and surveillance unit (3) for the storage (1), wherein the checking and surveillance unit is arranged in the inspection chamber (10) and has its connection with the spacing of the double wall (6) of the storage (1) effected by means of a fluid collecting line (4) as a suction line - made out of copper, steel, conductive PVC, or a different material that resists the fumes of the stored medium and is conductive - and by means of a measuring line (5) - made out of copper, steel, conductive PVC, or a different material that resists the fumes of the stored medium and is conductive - wherein the measuring line (5) is provided with a pressure measurement sensor (9a) for measuring the pressure in the double wall (6),
**characterised in that** the pressure measurement sensor (9a) of the inspection and surveillance unit (3) is connected to a leakage sensor (19) arranged outside of the inspection chamber (10) via a screened electric cable (9b), via a clamping body (11) having a housing and arranged within the inspection chamber (10), and via a connection pipeline,
wherein the housing of the clamping body (11) is filled with a suitable resin that resists the product stored in the storage (1), which resin is configured to prevent the passover of fumes into the connection pipeline to the leakage sensor (19), to prevent the ascent of the fumes in the connection pipeline up to the leakage sensor (19) and thereby provide a greater safety.

2. Surveillance system according to claim 1, **characterised in that** the inspection unit (3) is provided with a manometer.

3. Surveillance system according to claim 1, **characterised in that** it is arranged within the inspection chamber (10) of the storage and therefore in the area ATEX 1 (ATmospheres EXplosibles), wherein the emergence of the shielded electric cable (9b) out of the housing of the clamping body (11) is effected via an ATEX cable clamp (11b).

4. Surveillance system according to any of the aforementioned claims, **characterized in that** the leakage sensor (19) is configured to transmit the data via Internet, wireless connection, or telephone to an inspection central.

## Revendications

1. Système de surveillance pour une installation de stockage de carburant, comprenant :
- un système de stockage (1) à double paroi, le system de stockage possédant un regard de contrôle (10),
- une unité de contrôle et de surveillance (3) pour le système de stockage (1), l'unité de contrôle et de surveillance étant disposée dans le regard de contrôle (10) et dont la liaison avec l'espace intermédiaire de la double paroi (6) du système de stockage (1) est effectuée au moyen d'une conduite de collecte de fluides (4) sous la forme d'une conduite d'aspiration - constituée de cuivre, d'acier, de PVC conducteur ou d'un autre matériau qui résiste aux vapeurs du milieu stocké et est conducteur - et au moyen d'une conduite de mesure (5) - constituée de cuivre, d'acier, de PVC conducteur - ou d'un autre matériau qui résiste aux vapeurs du milieu stocké et est conducteur, où la conduite de mesure (5) est équipée d'un capteur de pression (9a) pour la mesure de la pression dans la double paroi (6),
**caractérisé en ce que** le capteur de pression (9a) de l'unité de contrôle et de surveillance (3) est relié avec un détecteur de fuites (19) disposé en dehors du regard de contrôle (10) par l'intermédiaire d'un câble électrique (9b) blindé, un corps de serrage (11) disposé à l'intérieur du regard de contrôle (10), qui présente un boîtier, et une conduite de raccordement,
où le boîtier du corps de serrage (11) est rempli avec une résine appropriée, résistante au produit stocké dans le système de stockage (1), quelle résine étant conçue pour empêcher le passage de vapeurs dans la conduite de raccordement vers le détecteur de fuites (19), afin d'éviter la remontée des vapeurs dans la conduite de raccordement jusqu'au détecteur de fuites (19) et assurer ainsi une sécurité accrue.

2. Système de surveillance selon la revendication 1, **caractérisé en ce que** l'unité de contrôle (3) est équipée d'un manomètre.

3. Système de surveillance selon la revendication 1, **caractérisé en ce qu'**il est disposé dans le regard de contrôle (10) du système de stockage et par conséquent dans la zone ATEX 1 (ATmosphères EXplosives), où
la sortie du câble électrique (9b) blindé hors du boîtier du corps de serrage (11) est réalisée par l'intermédiaire d'un serre-câble ATEX (11b).

4. Système de surveillance selon l'une des revendications précédentes, **caractérisé en ce que** le détecteur de fuites (19) est conçu pour transmettre les données par internet, par une liaison sans fil ou par téléphone à un centre de contrôle.
